# EUROPÄISCHE PATENTSCHRIFT

(11) **EP 0 531 854 B1**
(45) Veröffentlichungstag und Bekanntmachung des Hinweises auf die Patenterteilung: **16.03.1994**
(21) Anmeldenummer: 92114893.8
(22) Anmeldetag: 01.09.1992
(51) Int. Cl.: B60R 11/02

(54) **Befestigungsvorrichtung für ein elektronisches Gerät**
Fixing device for an electronic apparatus
Dispositif de fixation pour un appareil électronique

(30) Priorität: 07.09.1991 DE 4129864
(43) Veröffentlichungstag der Anmeldung: 17.03.1993
(73) Patentinhaber: Mannesmann Kienzle GmbH, 78052 Villingen-Schwenningen (DE)
(72) Erfinder: Hautvast, Heinz-Josef, Dipl.-Ing. (FH), W-7734 Brigachtal (DE); Plankenhorn, Horst, Dipl.-Ing. (FH), W-7730 Villingen-Schwenningen (DE); Sutermeister, Hans, W-7730 Villingen-Schwenningen (DE)

(56) Entgegenhaltungen:
- US-A- 4 050 663
- US-A- 4 714 303
- US-A- 4 930 696

## Beschreibung

Die Erfindung betrifft eine Befestigungsvorrichtung für ein elektronisches Gerät mit einem quaderförmigen Gehäuse für die Verwendung in einem Kraftfahrzeug.

Für Geräte, die nicht zwingend im oder im Bereich des Armaturenbretts eines Kraftfahrzeuges angeordnet werden müssen, weil sie weder der ununterbrochenen visuellen Information über Betriebsdaten des Fahrzeuges noch der Kommunikation des Fahrers mit einem an Bord befindlichen Datenerfassungsgerät oder mit Fernsprechteilnehmern noch dem Radioempfang dienen, bestehen insbesondere bei Personenkraftwagen erhebliche Anordnungs- und Befestigungsprobleme.

Dient ein derartiges Gerät beispielsweise der Langzeitdatenerfassung für Service-Zwecke, der Aufzeichnung von Unfalldaten oder als Rechnermodul für kommerziell genutzte Fahrzeuge bzw. Fahrzeuge für Sondereinsätze, wie Polizeifahrzeuge, Taxen und Rettungsfahrzeuge, so ist für eine optimale Datensicherung Sorge zu tragen, und es sind mechanische und klimatische Einflüsse weitestgehend zu reduzieren. Das bedeutet in dem ohnehin rauhen Milieu, dem ein Kraftfahrzeug ausgesetzt ist, daß das Gerät in der Fahrgastzelle angeordnet werden muß, wo für eine unauffällige Anordnung im wesentlichen nur eine Befestigung unter dem Fahrer- oder Beifahrersitz in Frage kommt. Verständlicherweise muß die Befestigung in besonderem Maße rüttelsicher und starr ausgeführt sein. Andererseits sind mechanische Spannungen, die über das Gerätegehäuse Verformungen des oder der Schaltungsträger des Gerätes verursachen könnten, mit Sicherheit zu vermeiden. Die Gefahr, daß derartige Verformungen auftreten, ist insbesondere in den Fällen gegeben, in denen eine Großserienfertigung angestrebt wird und dementsprechend das Gehäuse nicht aus einem preislich nicht mehr akzeptablen Metallguß sondern aus thermoplastischem Material gefertigt ist.

Der mögliche Einbauort bedingt, abgesehen von Unebenheiten des Fahrzeugbodens, weitere Schwierigkeiten, insbesondere was die Zugänglichkeit des Gerätes anbelangt, so daß Wartung und Austauschfähigkeit erschwert und ein kostengünstiger Selbsteinbau mit möglichst wenigen und einfachen Werkzeugen in Frage gestellt ist.

Die Aufgabe der vorliegenden Erfindung bestand somit darin, eine großseriengerechte Vorrichtung zu finden, mittels welcher mit einfachen Mitteln ein elektronisches Gerät mit einem quaderförmigen Gehäuse in einem Kraftfahrzeug austauschfähig befestigt werden kann. Dabei sollen die Befestigung auch in besonders ungünstigen Einbausituationen möglich und Rückwirkungen der Befestigung in Form von das Gerätegehäuse verformenden Kräften vermieden sein.

Die Lösung der Aufgabe sieht vor, daß ein mit dem Gehäuse des Gerätes verbindbarer Träger vorgesehen ist, daß ein am Befestigungsort des Gerätes befestigbarer Halter vorgesehen ist, daß der Träger und der Halter als Blechteile geformt sind, daß die Blechteile mittels Zungen-Schlitz-Verbindungen zusammengefügt sind und daß der Träger und der Halter in Fügerichtung verschraubt sind.

Eine bevorzugte Ausbildung der Erfindung ist dadurch gekennzeichnet, daß sowohl am Halter als auch am Träger ein Schenkel und wenigstens jeweils eine Zunge angeformt sind, daß in den Schenkeln den Zungen zugeordnete Schlitze ausgebildet sind und daß vorzugsweise im Halter wenigstens eine Schlitzmutter verdrehsicher angeordnet ist.

Eine weitere vorteilhafte Ausgestaltung sieht vor, daß die Zungen trapezförmig ausgebildet sind, daß die Längen der den Zungen zugeordneten Schlitze gleich oder kleiner sind als die größte Breite der Zungen, daß entweder am Halter oder am Träger im rechten Winkel zu den Schenkeln der gegenseitigen Abstandhaltung dienende Wangen angeformt sind und daß an dem die Wangen nicht tragenden Bauteil zwischen die Wangen eingreifende Finger angebogen sind.

Die gefundene Lösung ist insbesondere deshalb vorteilhaft, weil sie unter der Voraussetzung, daß der Halter montiert ist, eine besonders leichte und schnelle Montage des Gerätes gestattet, insbesondere aber ein rasches Entnehmen des Gerätes ermöglicht, was beispielsweise bei einem Unfallregistriergerät in der Nachunfallsituation von erheblicher Bedeutung ist, d. h. es ist nur eine Schraube zu lösen, und es ist von Vorteil, diese Schraube als Rändelschraube zu verwenden, damit in einem Ernstfalle ein werkzeugloses Lösen des Gerätes erfolgen kann. Ferner ist erwähnenswert, daß die erfindungsgemäße Befestigungsvorrichtung mit wenigen und mit besonders einfachen Bauteilen realisiert ist und sowohl der Forderung nach Fertigungsfähigkeit in Großserie als auch dem Selbsteinbau gerecht wird. Entscheidend ist der Vorzug, daß das Gerät nicht im Kraftfluß liegt und Befestigungsspannungen außerhalb des Gerätes ausgeglichen werden. Somit sind Verformungen des Gerätes aufgrund dessen Befestigung vermieden, und das Gehäuse des Gerätes kann ohne weiteres aus einem thermoplastischen Material hergestellt sein.

Im folgenden sei die Erfindung anhand der beigefügten Zeichnungen näher erläutert. Es zeigen
Fig. 1 eine Übersichtsdarstellung im Zustand der Montage des Gerätes mittels der erfindungsgemäßen Befestigungsvorrichtung,
Fig. 2 eine Seitenansicht des mittels der Befestigungsvorrichtung an einer Chassiswand oder am Fahrzeugboden befestigten Gerätes,
Fig. 3 eine perspektivische Darstellung des mit dem Gerät verbindbaren Trägers,
Fig. 4 eine perspektivische Darstellung des an einem Fahrzeugteil befestigbaren Halters,
Fig. 5 eine perspektivische Darstellung von Träger und Halter, wobei Träger und Halter gleichgestaltet sind,
Fig. 6 eine Seitenansicht des Gerätes und der Befestigungsvorrichtung gemäß Fig. 5.
Fig. 7 eine Draufsicht auf die unten liegende Gehäuseschale des Gerätes, in welchem der Träger spritzgußtechnisch eingebettet ist,
Fig. 8 eine Ansicht des befestigten Gerätes unter Verwendung eines Geräteunterteils gemäß Fig. 7,
Fig. 9 einen Teilschnitt der Ausrichtmittel der Befestigungsvorrichtung.

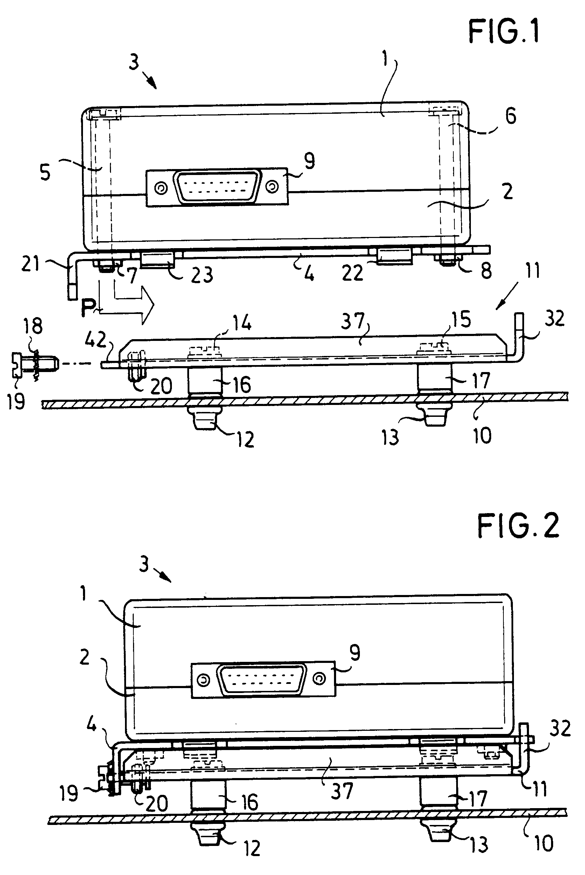

Wie die Übersichtsdarstellung Fig. 1 zeigt, ist einem beispielsweise aus zwei Gehäuseschalen 1 und 2 gebildeten Gehäuse 3 eines elektronischen Gerätes ein Träger 4 zugeordnet. Durchgangsschrauben 5 und 6 sowie vorzugsweise an dem Träger 4 angeschweißte und/oder eingepreßte Muttern 7 und 8 dienen dem Zusammenfügen der aus thermoplastischem Material gefertigten Gehäuseschalen 1 und 2 und des als biegesteifes Blechteil ausgebildeten Trägers 4. Mit 9 ist ein Steckersockel des Gerätes bezeichnet. Der Pfeil P soll die bevorzugte, bayonettartige Montagebewegung des Gerätes in bezug auf einen an einer Chassiswand oder am Fahrzeugboden 10 befestigten Halter 11 symbolisieren.

Die Befestigung des Halters 11 erfolgt unter Verwendung von drei oder vier in den Fahrzeugboden 10 eingesetzten und in geeigneter Weise abgedichteten Blindnietmuttern, von denen in den Fig. 1 und 2 zwei - 12 und 13 - dargestellt sind, sowie diesen zugeordneten Schrauben 14 und 15. Mit 16 und 17 sind Distanzhülsen bzw. Distanzringe bezeichnet. Eine vorzugsweise mit einer Zahnscheibe 18 verwendete Schraube 19 dient im Zusammenwirken mit einer im Halter 11 gelagerten Schlitzmutter 20 der bodenparallelen Sicherung der in Pfeilrichtung mit dem Halter 11 verbundenen, aus den Gehäuseteilen 1 und 2 und dem Träger 4 gebildeten Baugruppe. In der in Fig. 2 gezeigten, funktionsfertigen Montagestellung stehen zur Halterung des Gerätes senkrecht zum Fahrzeugboden 10 mehrere, im folgenden ausführlicher beschriebene Zungen-Schlitz-Verbindungen zwischen dem Halter 11 und dem Träger 4 miteinander in Eingriff.

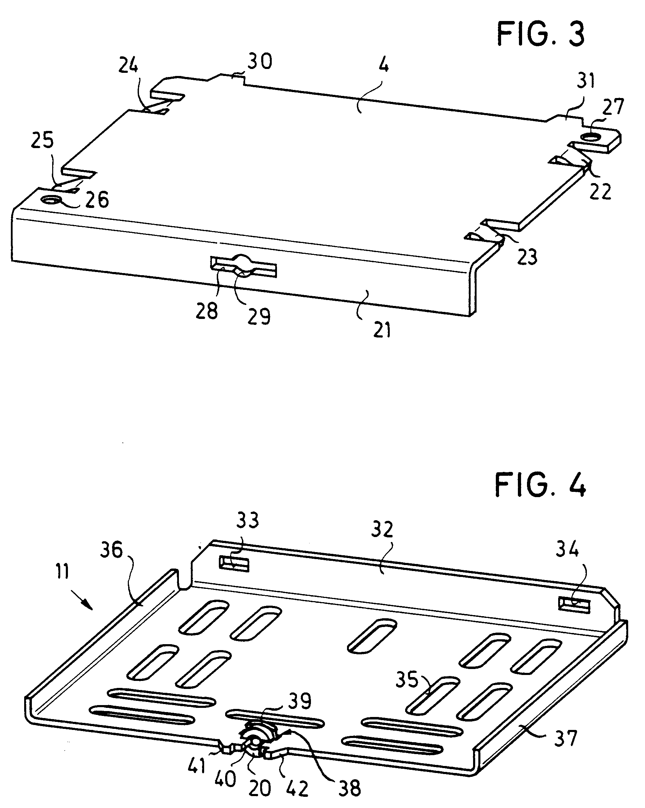

Die perspektivische Darstellung Fig. 3 zeigt den Träger 4 als ein weitgehend ebenflächiges Stanz-Biege-Teil mit einem angewinkelten Schenkel 21 und mehreren aus der Trägerebene herausgebogenen Fingern 22 bis 25. Öffnungen 26 und 27 dienen dem Durchführen der Schrauben 5 und 6 und gegebenenfalls dem Einpressen von an den Muttern 7 und 8 ausgebildeten Ansätzen, während ein im Schenkel 21 ausgebildeter Schlitz 28 für das Zusammenfügen von Träger 4 und Halter 11 vorgesehen ist und die Aufweitung 29 im Schlitz 28 dem Durchführen der Schraube 19 dient.

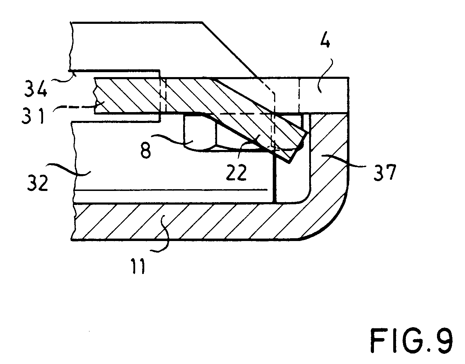

Wie aus der Fig. 3 ferner ersichtlich ist, sind an der einen Stirnseite des Trägers 4 Zungen 30 und 31, die mit dem in Fig. 4 dargestellten Halter 11 zusammenwirken, vorzugsweise trapezförmig ausgebildet. Der Halter 11 stellt ebenfalls ein biegesteifes Blechteil mit einem angeformten Schenkel 32 dar. In diesem sind den Zungen 30 und 31 des Trägers 4 zugeordnete Schlitze 33 und 34 angebracht, und zwar derart daß die Länge der Schlitze 33 und 34 gleich oder kleiner ist als die größte Breite der Zungen 30 und 31, so daß zumindest am Zungenansatz eine Klemmwirkung und somit ein spielfreies Zusammenfügen von Träger 4 und Halter 11 erfolgt. Ferner ist in dem Halter 11 eine Vielzahl von Schlitzen - einer ist mit 35 bezeichnet - vorgesehen, um die Befestigungsmittel relativ variabel setzen zu können, insbesondere an Einbauorten, an denen für das Gerät selbst nur wenig Anordnungsspielraum besteht. Zwei senkrecht zum Schenkel 32 angebogene Wangen 36 und 37 dienen, wie insbesondere aus dem Teilschnitt Fig. 9 hervorgeht, zusammen mit den Fingern 22 bis 25 in besonders einfacher Weise der Führung und Ausrichtung des Gerätes bzw. der Baugruppe 1, 2, 4, während der Montage bzw. während des Zusammenfügens der Zungen-Schlitz-Verbindungen zwischen dem Träger 4 und dem Halter 11.

Wie außerdem in Fig. 4 ersichtlich ist, ist die Schlitzmutter 20, die mittels des an ihr diametral ausgebildeten, nicht bezeichneten Schlitzes verdrehsicher in einer im Halter 11 vorgesehenen Aussparung 38 gelagert bzw. gehaltert ist, axial mittels einer Klammer 39 gesichert. Eine Freisparung 40, die für die in der Halterebene mit der Schlitzmutter 20 zusammenwirkende Schraube 19 erforderlich ist, teilt die dem Schlitz 28 zugeordnete Zunge in zwei Zinken 41 und 42, die gemeinsam in gleicher Weise wirksam sind wie die Zungen 30 und 31.

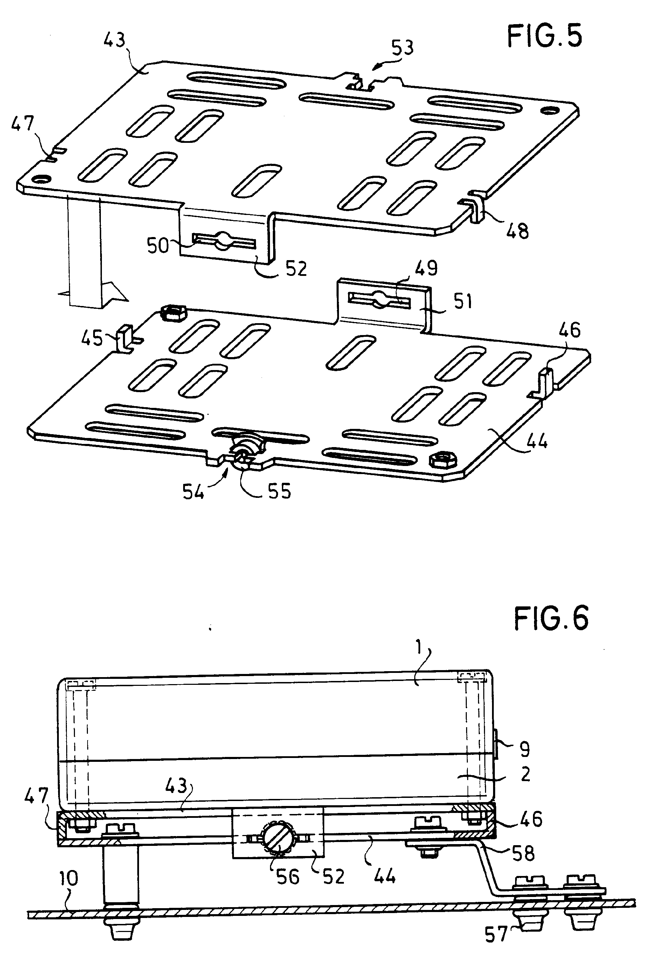

Mit der Fig. 5 ist ein Ausführungsbeispiel dargestellt, bei dem für Träger und Halter gleichgestaltete Stanz-Biege-Teile 43 und 44 vorgesehen sind. An beiden Teilen 43 und 44 sind der Abstandhaltung beim Zusammenbau dienende Finger 45 und 46 bzw. 47 und 48 angeformt sowie mit Schlitzen 49 und 50 versehene Schenkel 51 und 52 ausgebildet. Die den Schlitzen 49 und 50 zugeordneten Zungen 53 und 54 bzw. die die Zungen 53 und 54 bildenden Zinkenpaare sind in der bereits beschriebenen Weise ausgebildet, und es sind jeweils Vorkehrungen getroffen, um eine Schlitzmutter 55 zu haltern.

In der in Fig. 6 gezeigten Seitenansicht ist dem Gerät der gemäß Fig. 5 ausgebildete Träger 43 zugeordnet, und dieser ist mittels einer Schraube 56 mit dem gleichgestalteten Halter 44 verbunden. Die Fig. 6 zeigt ferner eine Variante der Befestigung des Halters 44 am Fahrzeugboden 10. Zusammen mit einer oder mehreren Blindnietmuttern 57 kann mittels Laschen 58 eine Befestigung auch außerhalb der Grundfläche des Halters 44 erfolgen. Durch Verformen der Laschen 58 lassen sich Unebenheiten stufenlos ausgleichen oder das Gerät, falls dies erforderlich ist, unabhängig von den Bodenkonturen in die Horizontallage bringen.

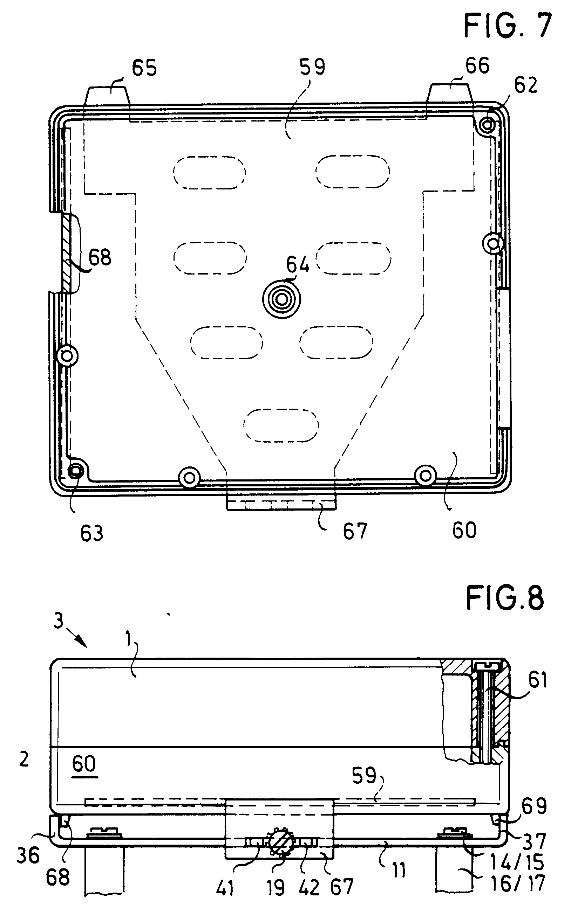

Bei dem Ausführungsbeispiel gemäß Fig. 7 ist ein Träger 59 als Einlegeteil spritzgußtechnisch in eine Gehäuseschale 60 eingebettet. In diesem Falle erfolgt die Verschraubung des Gehäuses 3 mittels Schrauben 61, denen - im Gegensatz zur Ausbildung gemäß Fig. 1 - in der Gehäuseschale 60 angeformte Gewindebuchsen 62 und 63 zugeordnet sind. Mit 64 ist eine zentral angeordnete Hülse bezeichnet, die Teil einer zusätzlichen Schraubverbindung, die plombiert werden kann, darstellt. Wie Fig. 7 ferner zeigt, ragen aus der Gehäuseschale 60 am Träger 59 ausgebildete Zungen 65 und 66 sowie ein abgewinkelter Schenkel 67 heraus. In dem Schenkel 67 ist in bereits beschriebener Weise ein nicht näher bezeichneter Schlitz vorgesehen, in welchen, wie Fig. 8 zeigt, die Zinken 41 und 42 des Halters 11, der bei dieser Lösung unverändert Anwendung finden kann, eingreifen. Der seitlichen Ausrichtung der Baugruppe 1, 60, 59 dienen an der Gehäuseschale 60 angeformte Stege 68 und 69.

Für den Fall, daß die Befestigungsvorrichtung plombiert werden soll, ist es denkbar, eine indirekte Plombierung dadurch vorzunehmen, daß die elektrische Verbindung plombiert wird und das Gehäuse des Steckers derart ausgebildet wird, daß es bei einer relativ engen Zuordnung von Steckersockel und der den Träger am Halter festhaltenden Schraube diese unzugänglich übergreift.

## Patentansprüche

1. Befestigungsvorrichtung für ein elektronisches Gerät mit quaderförmigem Gehäuse für die Verwendung in einem Kraftfahrzeug,
dadurch gekennzeichnet,
daß ein mit dem Gehäuse (3) des Gerätes verbindbarer Träger (4) vorgesehen ist,
daß ein am Befestigungsort des Gerätes befestigbarer Halter (11) vorgesehen ist, daß der Träger (4) und der Halter (11) als Blechteile geformt sind,
daß die Blechteile mittels Zungen-Schlitz-Verbindungen (30/33, 31/34 und 41, 42/28) zusammengefügt sind und daß der Träger (4) und der Halter (11) in Fügerichtung verschraubt sind.

2. Befestigungsvorrichtung nach Anspruch 1,
dadurch gekennzeichnet,
daß sowohl am Halter (11) als auch am Träger (4) ein Schenkel (21, 32) und wenigstens jeweils eine Zunge (30, 31 sowie 41 und 42) angeformt sind,
daß in den Schenkeln (21, 32) den Zungen (30, 31 sowie 41 und 42) zugeordnete Schlitze (33, 34 und 28) ausgebildet sind und
daß vorzugsweise im Halter (11) wenigstens eine Schlitzmutter (20) verdrehsicher angeordnet ist.

3. Befestigungsvorrichtung nach Anspruch 1 und 2,
dadurch gekennzeichnet,
daß die Schlitzmutter (20) im wesentlichen symmetrisch zu der am Halter (11) ausgebildeten Zunge (41 und 42) angeordnet und die Zunge (41 und 42) geschlitzt ist.

4. Befestigungsvorrichtung nach Anspruch 1,
dadurch gekennzeichnet,
daß die Zungen (30, 31 sowie 41 und 42) trapezförmig ausgebildet sind und
daß die Längen der den Zungen (30, 31 sowie 41 und 42) zugeordneten Schlitze (33, 34 und 28) gleich oder kleiner sind als die größte Breite der Zungen (30, 31 sowie 41 und 42).

5. Befestigungsvorrichtung nach Anspruch 1,
dadurch gekennzeichnet,
daß der Träger und der Halter gleichgestaltet sind (43 und 44).

6. Befestigungsvorrichtung nach Anspruch 1,
dadurch gekennzeichnet,
daß entweder am Halter (11) oder am Träger (4) im rechten Winkel zu den Schenkeln (21 oder 32) der gegenseitigen Abstandhaltung dienende Wangen (36, 37) angeformt sind und daß an dem die Wangen (36, 37) nicht tragenden Bauteil zwischen die Wangen (36, 37) eingreifende Finger (22, 23, 24, 25) angebogen sind.

7. Befestigungsvorrichtung nach Anspruch 1,
dadurch gekennzeichnet,
daß der Träger (59) in der unten liegenden Gehäuseschale (60) des Gerätes spritzgußtechnisch eingebettet ist und an der Gehäuseschale (60) der Ausrichtung zwischen den Wangen (36, 37) des Halters (11) dienende Stege (68, 69) angeformt sind.

8. Befestigungsvorrichtung nach Anspruch 1,
dadurch gekennzeichnet,
daß der Halter (11) als Langlochplatte ausgebildet ist.

9. Befestigungsvorrichtung nach Anspruch 1,
dadurch gekennzeichnet,
daß die den Träger (4) und den Halter (11) verbindende Schraube (19) und der Steckersockel (9) des Gerätes einande derart zugeordnet sind, daß das in geeigneter Weise gestaltete Steckergehäuse die Schraube (19) unzugänglich abdeckt.

## Claims

1. Securing apparatus for an electronic device having a cuboidal housing, for use in a motor vehicle, characterized in that a support (4) connectable to the housing (3) of the device is provided, in that a holder (11) securable at the location of securing the device is provided, in that the support (4) and the holder (11) are formed as sheet-metal parts, in that the sheet-metal parts are joined together by means of tongue-and-slot connections (30/33, 31/34 and 41, 42/28), and in that the support (4) and the holder (11) are screwed together in the direction of joining.

2. Securing apparatus according to Claim 1, characterized in that a leg (21, 32) and in each case at least one tongue (30, 31 and 41, 42) are integrally formed both on the holder (11) and on the support (4), in that slots (33, 34 and 28) associated with the tongues (30, 31 and 41 and 42) are made in the legs (21, 32), and in that at least one slotted nut (20) is arranged in a manner preventing rotation, preferably in the holder (11).

3. Securing apparatus according to Claim 1 and 2, characterized in that the slotted nut (20) is arranged substantially symmetrically with respect to the tongue (41 and 42) made on the holder (11), and the tongue (41 and 42) is slotted.

4. Securing apparatus according to Claim 1, characterized in that the tongues (30, 31 and 41 and 42) are constructed in the shape of a trapezium, and in that the lengths of the slots (33, 34 and 28) associated with the tongues (30, 31 and 41 and 42) are equal to or less than the greatest width of the tongues (30, 31 and 41 and 42).

5. Securing apparatus according to Claim 1, characterized in that the support and the holder are the same shape (43 and 44).

6. Securing apparatus according to Claim 1, characterized in that cheeks (36, 37) serving for mutual spacing are integrally formed either on the holder (11) or on the support (4) at a right angle to the legs (21 or 32), and in that fingers (22, 23, 24, 25) engaging between the cheeks (36, 37) are bent out of the component not carrying the cheeks (36, 37).

7. Securing apparatus according to Claim 1, characterized in that the support (59) is embedded by the injection moulding technique in the bottom housing part (60) of the device, and webs (68, 69) serving for alignment between the cheeks (36, 37) of the holder (11) are integrally formed on the housing part (60).

8. Securing apparatus according to Claim 1, characterized in that the holder (11) is constructed as a plate with elongate holes.

9. Securing apparatus according to Claim 1, characterized in that the screw (19), connecting the support (4) and the holder (11), and the plug socket (9) of the device are associated with one another such that the suitably shaped plug housing covers the screw (19) to make it inaccessible.

## Revendications

1. Dispositif de fixation pour un appareil électronique avec un boîtier parallélépipédique destiné à l'utilisation dans un véhicule automobile,
caractérisé par le fait
qu'il est prévu un support (4) pouvant être relié au boîtier (3) de l'appareil,
qu'il est prévu, d'autre part, une console (11) pouvant être fixée au lieu d'implantation de l'appareil, que ledit support (4) et ladite console (11) sont réalisés en pièces de tôle,
que lesdites pièces de tôle sont réunies au moyen d'assemblages à languette et fente (30/33, 31/34 et 41, 42/28) et que ledit support (4) et ladite console (11) sont assemblés par vis dans le sens de l'emboîtement.

2. Dispositif de fixation selon la revendication 1,
caractérisé par le fait
que sur la console (11) aussi bien que sur le support (4) sont formées une traverse (21, 32) et au moins
respectivement une languette (30, 31 ainsi que 41 et 42), que dans lesdites traverses (21, 32) sont pratiquées des fentes (33, 34 et 28) associées aux languettes (30, 31 ainsi que 41 et 42) et
qu'au moins un écrou à fente (20) immobilisé dans le sens radial est disposé, de préférence, dans ladite console (11).

3. Dispositif de fixation selon l'une quelconque des revendications 1 et 2,
caractérisé par le fait
que l'écrou à fente (20) est disposé, pour l'essentiel, symétriquement à la languette (41 et 42) formée sur la console (11) et que ladite languette (41 et 42) est fendue.

4. Dispositif de fixation selon la revendication 1,
caractérisé par le fait
que les languettes (30, 31 ainsi que 41 et 42) sont réalisées en une forme trapézoïdale et
que les longueurs des fentes (33, 34 et 28) associées auxdites languettes (30, 31 ainsi que 41 et 42) sont égales ou inférieures à la plus grande largeur desdites languettes (30, 31 ainsi que 41 et 42).

5. Dispositif de fixation selon la revendication 1,
caractérisé par le fait
que ledit support et ladite console sont de configurations identiques (43 et 44).

6. Dispositif de fixation selon la revendication 1,
caractérisé par le fait
que des faces (36, 37) servant à l'écartement réciproque sont formées, soit sur la console (11) soit sur le support (4), perpendiculairement auxdites traverses (21 ou 32) et que sur le composant ne portant pas lesdites faces (36, 37) sont cintrées des pattes (22, 23, 24, 25) s'engageant entre lesdites faces (36, 37).

7. Dispositif de fixation selon la revendication 1,
caractérisé par le fait
que le support (59) est encastré dans la coquille de boîtier (60) située en bas de l'appareil par la technique de moulage par injection et que des tenons (68) et (69) servant à l'orientation entre les faces (36, 37) de la console (11) sont formés sur ladite coquille de boîtier (60).

8. Dispositif de fixation selon la revendication 1,
caractérisé par le fait
que la console (11) est réalisée comme platine à trous oblongs.

9. Dispositif de fixation selon la revendication 1,
caractérisé par le fait
que la vis (19) assemblant le support (4) avec la console (11) et le socle de connecteur (9) de l'appareil sont associés l'une à l'autre de telle sorte que le boîtier de connecteur de configuration appropriée recouvre ladite vis (19) en la rendant inaccessible.
